(19) **Europäisches Patentamt European Patent Office Office européen des brevets**

(11) **EP 4 071 571 B1**

(12) **EUROPEAN PATENT SPECIFICATION**

(45) Date of publication and mention of the grant of the patent:
**08.01.2025 Bulletin 2025/02**

(21) Application number: **20915458.2**

(22) Date of filing: **29.05.2020**

(51) International Patent Classification (IPC):
***G05B 23/02*** *(2006.01)*

(52) Cooperative Patent Classification (CPC):
**G05B 23/024;** G05B 2219/24075

(86) International application number:
**PCT/JP2020/021299**

(87) International publication number:
**WO 2021/149277 (29.07.2021 Gazette 2021/30)**

(54) **PREDICTION APPARATUS, PREDICTION METHOD, AND PROGRAM**

PRÄDIKTIONSGERÄT, PRÄDIKTIONSVERFAHREN UND PROGRAMM

APPAREIL DE PRÉDICTION, PROCÉDÉ DE PRÉDICTION, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2020 JP 2020007716**

(43) Date of publication of application:
**12.10.2022 Bulletin 2022/41**

(73) Proprietor: **MITSUBISHI HEAVY INDUSTRIES ENGINE**
**& TURBOCHARGER, LTD.**
**Sagamihara-shi, Kanagawa 252-5293 (JP)**

(72) Inventors:
• **WAKASUGI, Kazuyuki**
 **Tokyo 100-8332 (JP)**
• **MORITA, Katsuaki**
 **Tokyo 100-8332 (JP)**
• **ANDOU, Junnosuke**
 **Tokyo 100-8332 (JP)**
• **ISHIDA, Ichirou**
 **Sagamihara-shi, Kanagawa 252-5293 (JP)**

(74) Representative: **Hoffmann Eitle**
**Patent- und Rechtsanwälte PartmbB**
**Arabellastraße 30**
**81925 München (DE)**

(56) References cited:
CN-A- 109 308 519    JP-A- 2010 527 089
JP-A- 2018 160 093    JP-A- 2019 159 604
JP-B2- 5 816 148     US-A1- 2014 149 325

## Description

Technical Field

The present invention relates to a prediction apparatus, a prediction method, and a program.

Background Art

There is a possibility that a device such as a gas engine that normally operates has to be shut down for an extended period once a failure occurs, and accordingly, there is also a possibility that a large loss occurs. If an abnormality of the device can be accurately predicted, the device can be operated with the minimum required downtime by performing pre-maintenance.

For example, PTL 1 discloses an event prediction system that predicts whether or not a specific abnormality occurs in a device, using a prediction model created by machine learning, to output a reliability of the prediction. Also, PTL 2 relates to an abnormality detection apparatus using measurement data included in learning data for N combinations of a plurality of items for training a learning model.

Citation List

Patent Literature

[PTL 1] JP 2016-157280 A
[PTL 2] JP 2019-159604 A

Summary of Invention

Technical Problem

In order to execute abnormality prediction on a device to be monitored using a statistical method such as machine learning, since intrinsic properties of the device are reflected in the prediction, it is considered that a prediction model is created using data collected when an abnormality has occurred in the device. However, this method cannot be used when abnormality prediction is performed on a newly introduced device or on a device in which an abnormality does not occur. Therefore, for example, it is considered that a prediction model is created using data collected from other devices of the same model in which an abnormality has occurred, and an abnormality of the newly introduced device is predicted by this prediction model. However, even when the devices are the same model, there is an individual difference among the devices. Therefore, even when a machine learning algorithm is simply applied, a model classified by the individual difference is obtained, and there is a possibility that an abnormality of other devices is predicted but the accuracy is not obtained.

The present invention provides a prediction apparatus according to claim 1, a prediction method according to claim 2, and a program according to claim 3 capable of solving the above problem.

Solution to Problem

The subject-matter according to the independent claims solves the above technical problem. This description exemplifies how the present invention may be carried out.

Advantageous Effects of Invention

According to the prediction apparatus, the prediction method, and the program described above, it is possible to perform prediction excluding the influence of an individual difference among devices.

Brief Description of Drawings

Fig. 1 is a block diagram showing a configuration example of a prediction system according to a first embodiment.

Fig. 2 is a first graph for describing a prediction method according to the first embodiment.

Fig. 3 is a second graph for describing the prediction method according to the first embodiment.

Fig. 4 is a third graph for describing the prediction method according to the first embodiment.

Fig. 5 shows a graph and a picture for describing a method for calculating a probability density according to the first embodiment.

Fig. 6 is a flowchart showing one example of a prediction model creation process according to the first embodiment.

Fig. 7 is a flowchart showing one example of a prediction process according to the first embodiment.

Fig. 8 is a graph showing one example of a distribution of index values of a combustion state for each load.

Fig. 9 is a block diagram showing a configuration example of a prediction system according to a second embodiment, which is not covered by the claims and represents background information useful for understanding the invention.

Fig. 10 is a flowchart showing one example of a prediction process according to the second embodiment, which is not covered by the claims and represents background information useful for understanding the invention.

Fig. 11 is a block diagram showing a configuration example of a prediction system according to a third embodiment.

Fig. 12 is a flowchart showing one example of a prediction process according to the third embodiment.

Fig. 13 is a table showing one example of prediction results and prediction reliabilities according to the third embodiment.

Fig. 14 is a table showing one example of the output of predicted values according to the third embodiment.

Fig. 15 is a block diagram showing one example of a hardware configuration of the prediction system according to each of the embodiments.

Description of Embodiments

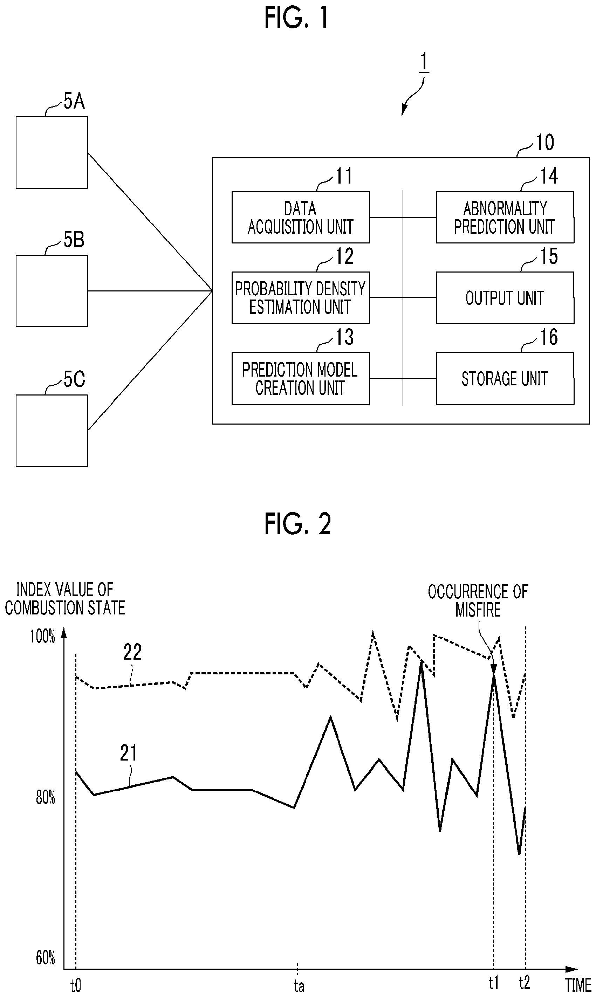

Hereinafter, a prediction system according to each embodiment will be described in detail with reference to Figs. 1 to 15.

<First Embodiment>

(Configuration)

Fig. 1 is a block diagram showing a configuration example of a prediction system according to a first embodiment.

A prediction system 1 includes devices 5A to 5C to be monitored and a prediction apparatus 10. The devices 5A to 5C are gas engines. The devices 5A to 5C are devices of the same model.

In the following description, according to the invention the devices 5A to 5C are gas engines of the same model, and a case where the prediction apparatus 10 predicts whether or not a misfire occurs in a cylinder of the gas engines will be described. It is assumed that a cylinder misfire has occurred in the devices 5A and 5B in the past and a cylinder misfire does not occur in the device 5C that is newly introduced.

The devices 5A to 5C are provided with a plurality of sensors, and each sensor measures, for example, a rotation speed or an output of the gas engine, or a physical quantity related to a combustion state of the cylinder (for example, a pressure, a temperature, or the like of the cylinder). The devices 5A to 5C include a control device. The control device issues warning data, for example, when a measured value measured by the sensor or a value calculated based on the measured value exceeds a predetermined threshold value. The devices 5A to 5C are connected to the prediction apparatus 10, and the devices 5A to 5C transmit the measured value measured by the sensor and the warning data to the prediction apparatus 10.

The prediction apparatus 10 includes a data acquisition unit 11, a probability density estimation unit 12, a prediction model creation unit 13, an abnormality prediction unit 14, an output unit 15, and a storage unit 16.

The data acquisition unit 11 acquires operation data of the devices 5A to 5C. The operation data is a measured value measured by each sensor of the devices 5A to 5C, or a value calculated based on the measured value. For example, when the devices 5A to 5C are gas engines, the operation data is a pressure or temperature of the cylinder, an output of the gas engine, a rotation speed, or the like. The data acquisition unit 11 acquires warning data for making a notification of an abnormality that has occurred in the devices 5A to 5C. For example, when a misfire occurs in a cylinder of the device 5A, the data acquisition unit 11 acquires identification information of the cylinder in which the misfire has occurred, the time of the occurrence of the misfire, and warning data for making a notification of the occurrence of the misfire from the device 5A.

The probability density estimation unit 12 estimates probability densities of the data used for predicting an occurrence of an abnormality, using the operation data acquired by the data acquisition unit 11.

The prediction model creation unit 13 creates a prediction model that predicts whether or not an abnormality occurs in the devices 5A to 5C, based on an estimated probability density value estimated by the probability density estimation unit 12. For example, the prediction model creation unit 13 learns estimated probability density values of operation data collected when a cylinder misfire has occurred in the devices 5A and 5B in the past, and calculates a threshold value (prediction model) for determining whether or not a cylinder misfire occurs when the probability density reaches a certain value.

The abnormality prediction unit 14 predicts whether or not an abnormality (a cylinder misfire) occurs in the devices 5A to 5C, based on an estimation result of the probability density estimated by the probability density estimation unit 12 and the prediction model created by the prediction model creation unit 13.

The output unit 15 outputs a prediction result generated by the abnormality prediction unit 14. For example, the output unit 15 displays the prediction result on a monitor of the prediction apparatus 10 or transmits the prediction result to another apparatus by e-mail or the like. The storage unit 16 stores data such as the operation data acquired by the data acquisition unit 11, the estimated probability density value, and the prediction model.

(Task of Abnormality Prediction based on Operation Data)

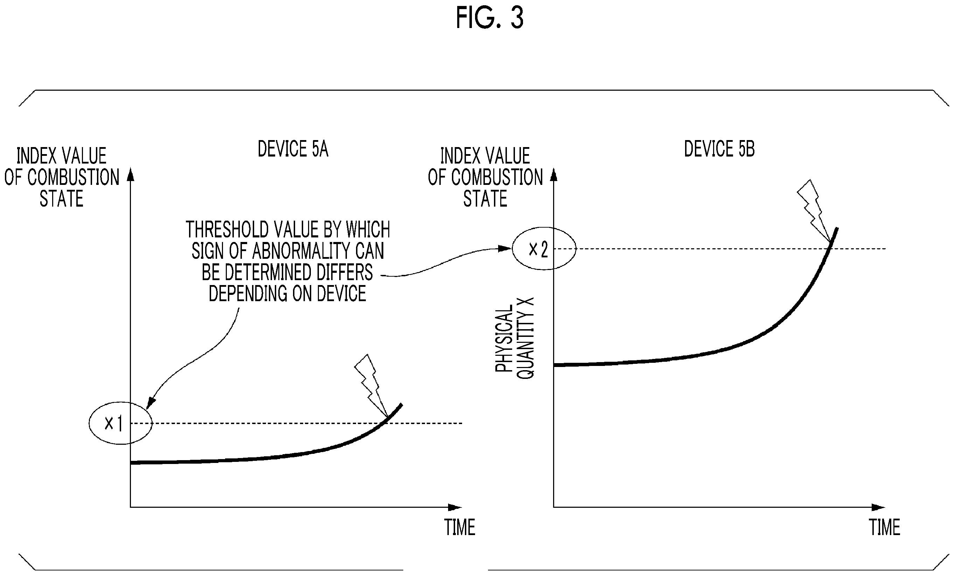

Figs. 2 and 3 are first and second graphs for describing a prediction method according to the first embodiment, respectively.

Fig. 2 shows a transition of index values for diagnosing a combustion state based on the in-cylinder pressure of cylinders of the devices 5A and 5B. The vertical axis of the graph in Fig. 2 is the magnitude of the index value, and the horizontal axis is time. A solid line 21 represents index values of combustion states of the device 5A, and a dashed line 22 represents index values of combustion states of the device 5B. The index value of a combustion state indicates a rate at which the cylinder rotates in a state where the combustion is weak (for example, when the cylinder rotates in a state where the combustion is weak 50 times out of 100 times, the index value is 50%), and the higher the index value is, the larger percentage the weak combustion state takes, which means that there is a higher possibility of misfire to that extent. Whether or not the combustion is weak is calculated based on the pressure of the cylinders. As shown in the drawings, since the line 22 makes transition in a state where the index value is higher than that of the line 21, it is expected that a misfire occurs in a cylinder of the device 5B. However, actually, at time t1, a misfire has occurred in a cylinder of the device 5A. It is considered that the reason is due to the influence of an individual difference between two cylinders, a difference between the attachment positions of pressure sensors of the devices 5A and 5B, an individual difference among the pressure sensors, and the like. Namely, the device 5B is in a normal operation state even when the index value makes transition at relatively high values. On the other hand, in the device 5A, the transition of the index value at values lower than those of the device 5B represents a normal operation state. In such a case, for example, as shown in Fig. 3 as an example, a method is considered in which a determination threshold value (the threshold value of the device 5A is x1 and the threshold value of the device 5B is x2) is provided for each device and misfire prediction is performed. However, in such a method, it is necessary to calculate a threshold value for each device. In addition, it is not possible to set a threshold value for the device 5C that is newly introduced, and it is not possible to perform prediction. Therefore, in the present embodiment, a prediction model that is applicable regardless of an individual difference is created by performing a process of correcting the individual difference on the operation data of the devices 5A to 5C and by learning the corrected data.

(Prediction Model Excluding Influence of Individual Difference)

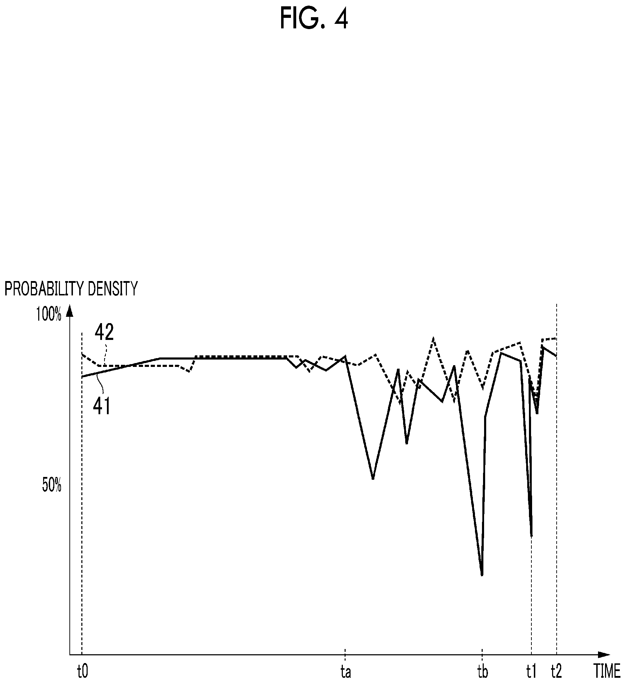

Fig. 4 is a third graph showing the prediction method according to the first embodiment.

Fig. 4 shows a transition of the probability density when an index value of a combustion state at each time shown in Fig. 2 as an example is converted into a probability density. The vertical axis of the graph of Fig. 4 is the probability density, and the horizontal axis is time. The probability density of the index value of the combustion state is the ease of obtaining an index value of a combustion state at each time. A line 41 represents probability densities of index values of combustion states calculated for the cylinders of the device 5A, and a line 42 represents probability densities of index values of combustion states calculated for the cylinders of the device 5B. The values at each time in the lines 41 and 42 indicate the ease of obtaining index values of combustion states of the cylinders of the devices 5A and 5B at the same time. When time t0 to t2 is a domain, the probability densities are calculated based on index values (Fig. 2) of a combustion state observed in each of the devices 5A and 5B during the domain. As shown in the drawing, both the lines 41 and 42 make transition at values close to 100% up to the vicinity of time ta. This indicates that the index value of the combustion state observed in the device 5A up to time ta is the same value as an index value of a combustion state frequently occurring in the device 5A. The same also applies to the device 5B. Namely, this indicates that both the devices 5A and 5B are in a normal operation state during this period. However, after time ta, the probability density of the line 42 fluctuates and greatly decreases particularly at time tb, and thereafter, a misfire occurs at time t1 when the probability density decreases. On the other hand, the probability density (line 42) of the device 5B in which a misfire does not occur makes transition at relatively high values even after time ta.

When Figs. 2 and 4 are compared, it can be seen that the index values of the combustion state of the devices 5A and 5B between which there is a large difference in Fig. 2 are corrected to values of the same magnitude in Fig. 4 in which the index value is converted into the probability density. Namely, the influence of an individual difference can be removed by converting data including the individual difference, into the probability density. As for a time that the probability density is low such as a value of the line 41 at time tb or time t1, it is shown that the index value of the combustion state at that time is a rare value that does not normally appear. It is possible to detect that the devices 5A to 5C are not in a normal operation state, by converting the operation data into the probability density in such a manner and by monitoring a decrease in probability density. Therefore, in the present embodiment, a prediction model is created by converting the operation data into the probability density to remove the individual difference among the devices 5A to 5C, and then by learning a relationship between the probability density and an actual result of an abnormality that has occurred in the devices 5A and 5B.

(Estimation of Probability Density)

Next, a method for estimating a probability density will be described. For example, it is assumed that 20 measured values of a certain parameter are obtained. It is assumed that 19 out of the 20 values are "1" and one value is "10". Then, a probability density at which the 19 values each are "1" is 95% from 19 ÷ 20 = 0.95. A probability density at which the one value is "10" is 5% from 1 ÷ 20 = 0.05. When one variable has discrete values in such a manner, a probability density can be easily obtained by calculating an appearance frequency of each value. However, in the above example, when 19 values of "1" and one value of "1.1" are obtained, there is room for review as to whether or not "1.1" can be treated in the same manner as "10". In addition, it is not easy to obtain a probability density, for example, for when a plurality of variables such as a pressure and a temperature of the cylinder are included, or for a variable for which the appearance frequency cannot be expressed by a simple normal distribution. Therefore, in the present invention, the probability densities of the operation data are estimated using a variational Bayesian method. According to the variational Bayesian method, even when a variable has either of a continuous value and a discrete value, the variable can be handled, and even when operation data is multivariate data or has a mixed distribution, a distribution of the operation data can be estimated.

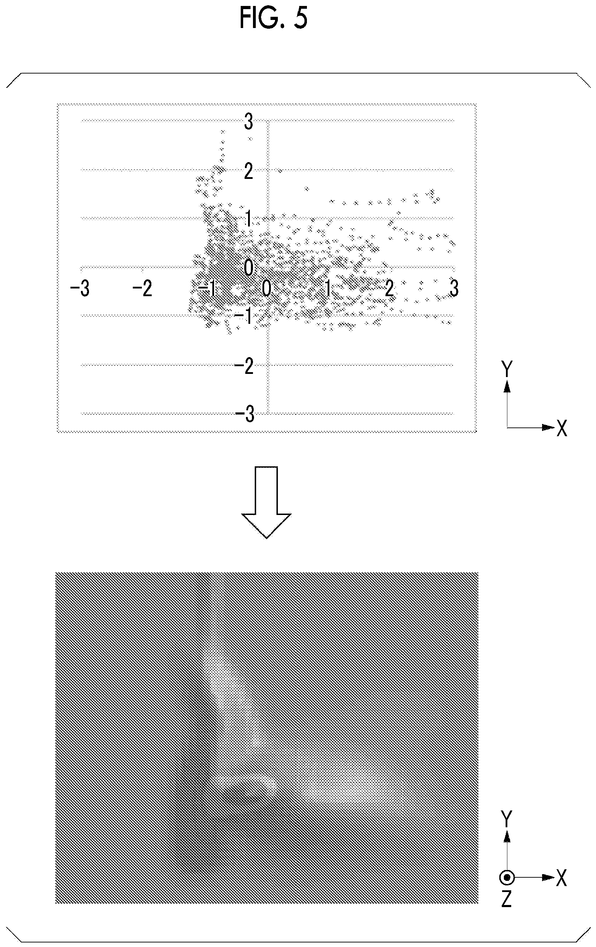

Fig. 5 shows a graph and a picture for describing the method for calculating a probability density according to the first embodiment.

For example, when there exist N sets (for a predetermined time) of operation data x in which two parameters such as a pressure and a temperature of a cylinder are used to determine a misfire of one cylinder and values of the two parameters at a certain time are one set, in the variational Bayesian method, it is supposed that a distribution of the operation data x is expressed by a mixture of K normal distributions, and a mixed multivariate normal distribution P(x) including the K normal distributions is defined by the following equation (2) (K is an arbitrary number). Then, three parameters, namely, a parameter $\pi_k$ (mixing coefficient of a k-th normal distribution among the K normal distributions), $\mu_k$ (average of the k-th normal distribution among the K normal distributions), and [sigma]$_k$ (variance of the k-th normal distribution among the K normal distributions) of the mixed multivariate normal distribution P(x) (the following equation (2)), which maximize a likelihood $\Pi$ expressed by the following equation (1), are estimated. In the estimation, a prior distribution expressed by the following equation (3) is given. Dir is a Dicre distribution, W is a Wishart distribution, and each of $m_0$, $\beta_0$, $W_0$, and $v_0$ is an arbitrary initial value.

[Equation 1]

$$\prod_n^N p\left(x_n \middle| \pi_k, \mu_k, \Sigma_k\right) \qquad \cdots (1)$$

$\Sigma_k$ is written as [sigma]$_k$ in the specification.

[Equation 2]

$$P(x) = \sum_{k=1}^{K} \pi_k N\left(x \middle| \mu_k, \Sigma_k\right) \qquad \cdots (2)$$

$\Sigma_k$ is written as [sigma]$_k$ in the specification.

[Equation 3]

$$p\left(\pi\right) = Dir\left(\pi \middle| \alpha_0\right)$$

$$p\left(\mu, \Sigma\right) = \prod_{k=1}^{K} N\left(\mu_k \middle| m_0, \left(\beta_0 \cdot \Sigma^{-1}\right)^{-1}\right) W\left(\sum_k^{-1} \middle| W_0, v_0\right)$$

$$\cdots (3)$$

When the three parameters that maximize the likelihood Π can be estimated, a shape ($\mu_k$ and [sigma]$\Sigma_k$) and a mixing ratio ($\pi_k$) of each of the K normal distributions are determined, and a distribution shape of the operation data x can be obtained by superimposing the K normal distributions on top of each other. The upper drawing of Fig. 5 shows one example of a graph in which the N operation data x are plotted. The lower drawing of Fig. 5 shows the distribution shape of the operation data x estimated by the variational Bayesian method. For example, an X-axis and a Y-axis in the upper and lower drawings of Fig. 5 are the temperature and the pressure of the cylinder, respectively. A value on a Z-axis in the lower drawing of Fig. 5 indicates an estimated probability density value at which operation data (combination of values of the temperature and the pressure) of each coordinate appears. For convenience of description, the case of two variables has been described, but even when the number of the operation data x is 3 or more, a probability density for any operation data x can be calculated by the variational Bayesian method.

(Prediction Model Creation Process)

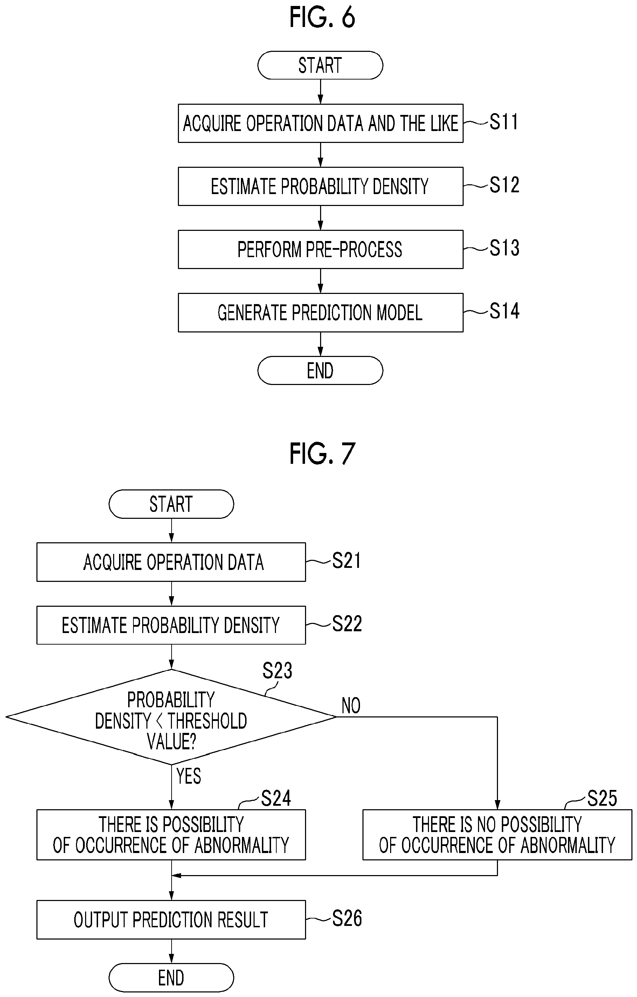

Fig. 6 is a flowchart showing one example of a prediction model creation process according to the first embodiment.

As one example, a misfire prediction model will be created based on index values of combustion states. First, the data acquisition unit 11 acquires operation data for a predetermined period (for example, index values of combustion states for each day) from the devices 5A and 5B, and the storage unit 16 stores the data (step S11). The data acquisition unit 11 acquires warning data of which a notification is made by the devices 5A and 5B in the same period as that of the operation data. The warning data includes, for example, the occurrence of a misfire, identification information of a misfired cylinder, and the time of the misfire. The storage unit 16 stores the warning data for the same period as that of the operation data.

Next, the probability density estimation unit 12 applies the variational Bayesian method to the operation data to estimate probability densities of the operation data (step S12). For example, the probability density estimation unit 12 calculates estimated probability density values of the index values of the combustion states for each day, and records the estimated probability density values in the storage unit 16 in association with a date. Next, the prediction model creation unit 13 performs a pre-process in which with reference to the warning data stored in the storage unit 16, label information of "misfire occurrence" is attached to estimated probability density values on a day when a misfire has occurred, and label information of "no misfire" is attached to estimated probability density values on another day (step S13).

Next, the prediction model creation unit 13 uses the estimated probability density values to which the label information has been attached, as learning data, and creates a prediction model representing a relationship between the occurrence of a misfire and the probability density using a predetermined technique (step S14). For example, a support vector machine (SVM), a decision tree, a neural network, or the like can be used as the prediction model creation technique. The prediction model creation unit 13 records the prediction model in the storage unit 16. The created prediction model is, for example, a threshold value for the probability density. In this example, the estimated probability density value of the index value of the combustion state is used as a parameter in advance, but a parameter may be selected through machine learning using learning data in which estimated probability density values of a number of parameters are associated with label information (selection of a feature quantity), and a prediction model may be created based on estimated probability density values of the selected parameter.

In the above process, a label of "misfire occurrence" is attached to estimated probability density values of operation data on a day when a misfire has actually occurred, but in order to perform prediction for the future (for example, up to one month), the prediction model creation unit 13 may consider that a misfire can occur after a day that goes back a predetermined period from the day when a misfire has actually occurred (for example, one month ago), and may attach the label information of misfire occurrence to estimated probability density values for that period. For example, when a misfire has occurred on August 1, 2019, the label of misfire occurrence is attached to estimated probability density values acquired from July 1 to August 1, 2019. The prediction model for predicting that a misfire can occur within one month can be created by such a process.

As described above, in the present embodiment, the operation data is converted into the estimated probability density values, and the prediction model is created based on the probability densities. Accordingly, it is possible to create the prediction model that is common to the devices 5A to 5C and that excludes the influence of the individual difference among the devices 5A to 5C.

(Prediction Process)

Next, a misfire prediction process for the device 5C that is newly introduced will be described with reference to Fig. 7. Fig. 7 is a flowchart showing one example of the prediction process according to the first embodiment.

First, the data acquisition unit 11 acquires the latest operation data of the device 5C (for example, index values of combustion states for today) (step S21). The data acquisition unit 11 outputs the latest operation data to the probability density estimation unit 12. Next, the probability density estimation unit 12 estimates probability densities of the latest operation data (step S22). The storage unit 16 stores operation data of the device 5C for a predetermined period, and the probability density estimation unit 12 estimates a probability density of an index value of a latest combustion state through the variational Bayesian method using the stored operation data and the latest operation data. The probability density estimation unit 12 outputs the estimated probability density value to the abnormality prediction unit 14. Next, the abnormality prediction unit 14 compares the estimated probability density value to the threshold value (prediction model).

When the estimated probability density value is smaller than the threshold value (step S23: Yes), the abnormality prediction unit 14 determines that there is a possibility of the occurrence of an abnormality (cylinder misfire) in the device 5C (step S24). The output unit 15 outputs a prediction result that there is a possibility of misfire (step S26). When the estimated probability density value is the threshold value or more (step S23: No), the abnormality prediction unit 14 determines that there is no possibility of the occurrence of an abnormality (misfire) in the device 5C (step S25). The output unit 15 outputs a prediction result that there is no possibility of misfire (step S26) .

According to the process of Fig. 7, in the prediction of an abnormality of the devices 5A to 5C among which there is a large individual difference, an occurrence of an abnormality in the device 5C which is newly introduced and in which an abnormality does not occur can also be predicted without being affected by the individual difference among the devices 5A to 5C. In addition, it is possible to more accurately predict an occurrence of an abnormality than in a prediction model of the related art which is created by learning operation data and in which characteristics of devices are reflected.

<Second Embodiment>

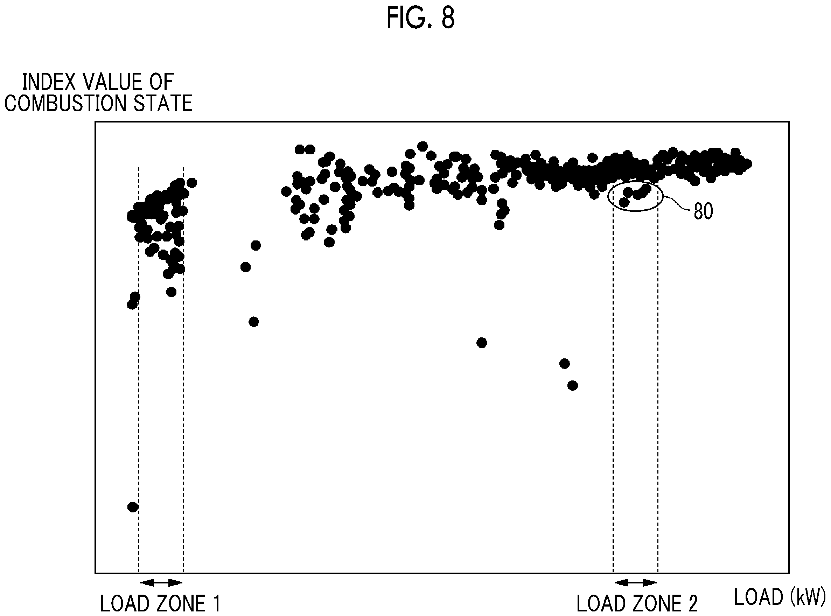

Hereinafter, a prediction apparatus 10a according to a second embodiment, which is not covered by the claims and represents background information useful for understanding the invention, will be described with reference to Figs. 8 to 10.

In the first embodiment, an abnormality of the devices 5A to 5C is determined by a decrease in an estimated probability density value of operation data (appearance of operation data of which the occurrence frequency is low). For example, (1) when the devices 5A to 5C always operate under a constant load and to (2) when the operation under a load of 100% and the operation under a load of 80% each are performed at a ratio of 5 : 5, the method of the first embodiment is effective. For example, in the case of (1), it is considered that the estimated probability density value of the operation data makes transition at a value close to 100%. In the case of (2), it is considered that the estimated probability density value of the operation data for both the loads makes transition at a value close to 50% during operation under each load. Therefore, an abnormality can be considered to have occurred when the estimated probability density value greatly decreases from 100% or 50% that is a reference. However, an effective feature quantity may not be obtained merely by converting the operation data into the estimated probability density value. (3) For example, when the operation under a load of 100% and the operation under a load of 80% are performed at a ratio of 9 : 1, there is a possibility of not being able to distinguish whether a decrease in the estimated probability density value is a decrease caused by the operation of the device 5A or the like under a load of 80% or a decrease caused by the occurrence of an abnormality during operation under a load of 100%. For example, even when the devices 5A to 5C start and stop during one day operation and operate under a rated load during operation, there is a possibility that it is not possible to determine whether a decrease in the estimated probability density value is caused by the occurrence of an abnormality during operation under the rated load or by the start and stop. Therefore, the prediction apparatus 10a of the present embodiment estimates a probability density for each operation mode of the devices 5A to 5C and performs abnormality prediction with respect to different threshold values that are different for each operation mode.

Fig. 8 shows one example of a distribution of index values of combustion states for each load. For example, among index values of combustion states observed during operation in a load zone 2, the occurrence frequency of index values of combustion states in a circle 80 is not high (probability density is low). However, the values occur at a high frequency during operation in a load zone 1. Therefore, it can be said that when the index values of the combustion states in the circle 80 are observed during operation in the load zone 2, there is a possibility of the occurrence of an abnormality, and when the index values of the combustion states in the circle 80 are observed during operation in the load zone 1, there is a high possibility of the device 5A or the like operating normally. In response to such a situation, the prediction apparatus 10a calculates a probability density of an index value of a combustion state for each operation mode (for example, the operation mode in the load zone 1 is referred to as an operation mode 1, and the operation mode in the load zone 2 is referred to as an operation mode 2), and performs abnormality prediction with respect to the threshold value for each operation mode.

(Configuration)

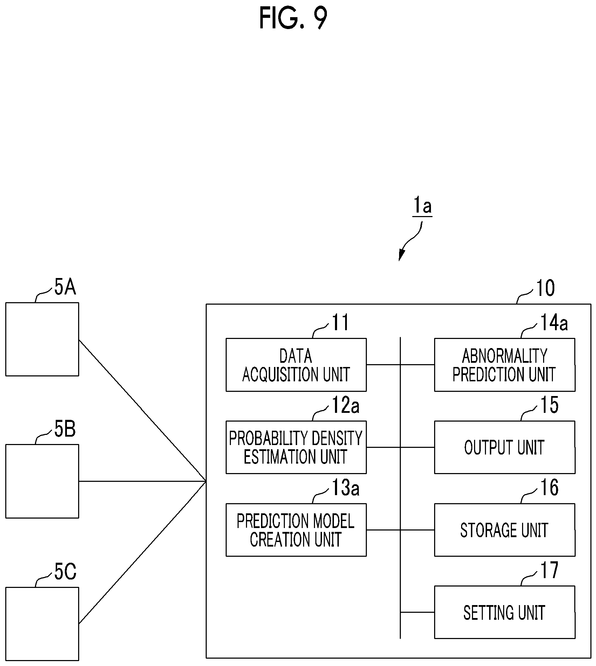

Fig. 9 is a block diagram showing a configuration example of a prediction system according to the second embodiment.

Among configurations of a prediction system 1a according to the second embodiment of the present disclosure, the same functional units as those forming the prediction system 1 according to the first embodiment are denoted by the same reference signs, and a description thereof will be omitted. The prediction system 1a includes the prediction apparatus 10a and the devices 5A to 5C. The prediction apparatus 10a includes a probability density estimation unit 12a, a prediction model creation unit 13a, and an abnormality prediction unit 14a instead of the probability density estimation unit 12, the prediction model creation unit 13, and the abnormality prediction unit 14 of the first embodiment. The prediction apparatus 10a includes a setting unit 17.

The probability density estimation unit 12a calculates a conditional probability for an estimated probability density value of operation data. Specifically, when a probability density of the operation data x is $P(x)$, the probability density estimation unit 12a calculates P(x operation mode). P (x|operation mode) is calculated as follows.

(1) For example, when the operation mode can be determined by the load and the rotation speed, a joint probability of $P(x, \text{load}, \text{rotation speed})$ is estimated by applying the variational Bayesian method to a combination of the operation data (x, load, rotation speed).

(2) Similarly, a joint probability of P (load, rotation speed) is estimated.

(3) P (x|operation mode) is calculated by P (x|operation mode) = $P(x, \text{load}, \text{rotation speed}) \div P(\text{load}, \text{rotation speed})$.

The prediction model creation unit 13a creates a prediction model for each operation mode. For example, the prediction model creation unit 13a attaches label information of "an abnormality has occurred" to a conditional probability P(x|operation mode) for each operation mode when an abnormality occurs within a predetermined period from the time that operation data which is a basis of the conditional probability is measured, attaches label information of "no abnormality has occurred" when an abnormality does not occur, and creates a prediction model for each operation mode using machine learning.

The abnormality prediction unit 14a performs abnormality prediction based on the conditional probability of the estimated probability density value and the prediction model for each operation mode.

The setting unit 17 receives the setting of parameters used for the determination of an operation mode. The devices 5A to 5C are gas engines, and an operation mode (start and stop, a steady load operation, and a partial load operation) can be determined by the load (generated power) of the devices 5A to 5C and the rotation speed of the engine. A user can input setting information to the prediction apparatus 10a, the setting information representing a relationship between parameters "load", "rotation speed", and "operation mode" (for example, when the load has a value within a predetermined range based on a rated load and the rotation speed has a value within a predetermined range based on a rated rotation speed, the operation mode is a rated operation, and when the load is a "threshold value 1" or less and the rotation speed is a "threshold value 2" or less, the operation mode is during starting and stopping). The setting unit 17 receives the setting information input by the user, and records the setting information in the storage unit 16.

The parameters for determining an operation mode may include outside air temperature, humidity, weather, and the like in addition to the load and the rotation speed.

(Prediction Process)

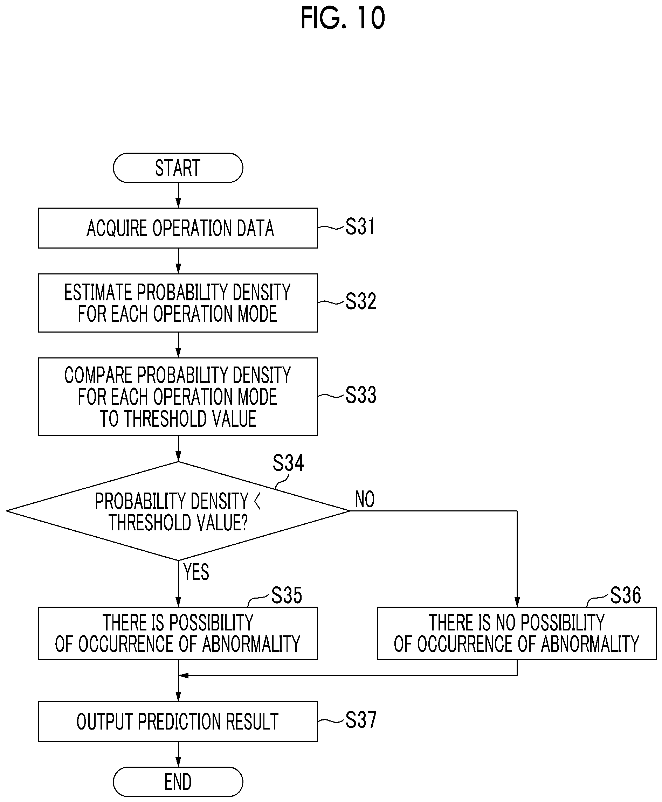

Next, an abnormality prediction process in the second embodiment will be described with reference to Fig. 10. Fig. 10 is a flowchart showing one example of the prediction process according to the second embodiment.

As a premise, it is assumed that the setting information for the determination of an operation mode has been set and the prediction model creation unit 13a has already created the prediction model for each operation mode.

First, the data acquisition unit 11 acquires the latest operation data of the device 5C (for example, an index value of a combustion state, a load, and a rotation speed of the engine) (step S31). The data acquisition unit 11 outputs the latest operation data to the probability density estimation unit 12a. Next, the probability density estimation unit 12a estimates a probability density for each operation mode (step S32). For example, the storage unit 16 stores operation data of the device 5C for a predetermined period for each operation mode. The probability density estimation unit 12a specifies an operation mode indicated by the latest operation data, from the latest operation data and the setting information for the determination of the operation mode. The probability density estimation unit 12a estimates a joint probability of P(index value of combustion state, load, rotation speed) through the variational Bayesian method using the latest operation data and operation data corresponding to the specified operation mode among the stored operation data. The probability density estimation unit 12a estimates a joint probability of P(load, rotation speed) through the variational Bayesian method using the latest operation data and the operation data corresponding to the specified operation mode. The probability density estimation unit 12a calculates a probability density of the operation data in the operation mode indicated by the latest operation data, using P(index value of combustion state, load, rotation speed) $\div$ P(load, rotation speed). The probability density estimation unit 12a outputs an estimated probability density value for each operation mode to the abnormality prediction unit 14a.

Next, the abnormality prediction unit 14a compares the estimated probability density value for each operation mode to a threshold value (prediction model) for each operation mode (step S33). The abnormality prediction unit 14a determines an operation mode based on the load and the rotation speed of the operation data acquired by the data acquisition unit 11, and selects a threshold value for the determined operation mode. The abnormality prediction unit 14a compares the estimated probability density value for each operation mode estimated by the probability density estimation unit 12a, to the threshold value for the operation mode.

When the estimated probability density value is smaller than the threshold value (step S34: Yes), the abnormality prediction unit 14a determines that there is a possibility of an abnormality (cylinder misfire) occurring in the device 5C (step S35). The output unit 15 outputs a prediction result that there is a possibility of misfire (step S37).

When the estimated probability density value is the threshold value or more (step S34: No), the abnormality prediction unit 14a determines that there is no possibility of an abnormality (misfire) occurring in the device 5C (step S36). The output unit 15 outputs a prediction result that there is no possibility of misfire (step S37).

In a case where the operation mode of the device 5A or the like changes as described above and the operation in a specific operation mode among the operation modes is rare, even when operation data is converted into a probability density, there is a possibility of not being able to distinguish whether an abnormality has occurred or operation is performed in the rare operation mode.

According to the present embodiment, even when different operation modes exist in the operation data, since an abnormality is determined based on an estimation result of the probability density for each operation mode, it is possible to distinguish whether the operation mode itself is rare or a value of the operation data is rare, and it is possible to improve the abnormality prediction accuracy.

[Third Embodiment]

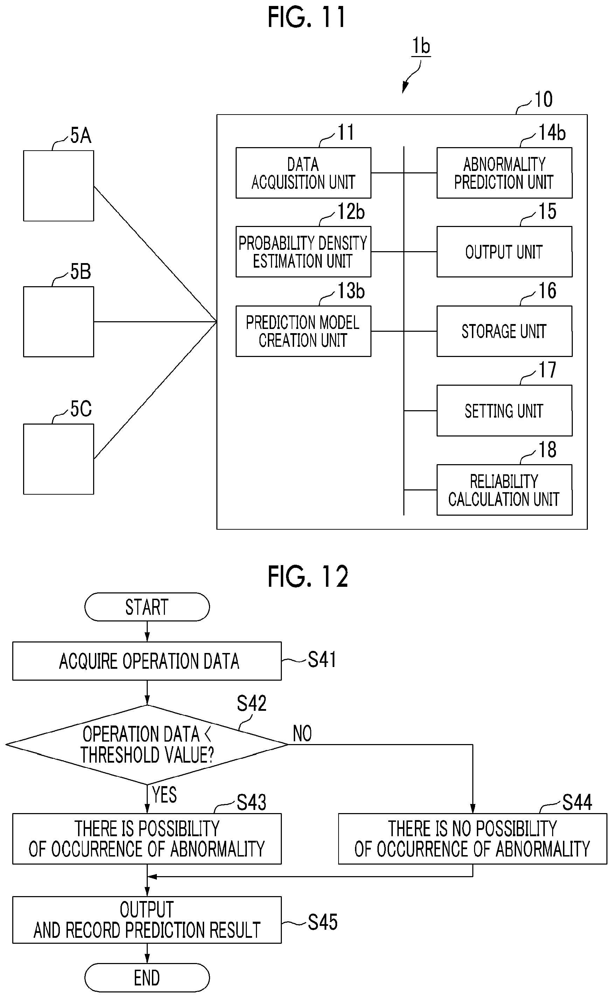

Hereinafter, a prediction apparatus 10b according to a third embodiment will be described with reference to Figs. 11 to 14.

In the first and second embodiments, prediction is performed using one prediction model. In the third embodiment, prediction is performed using a plurality of prediction models, and a reliability of prediction is calculated for each combination of predicted values by each prediction model.

For example, operation data obtained from the devices 5A to 5C may include a parameter $\alpha$ for which the individual difference is small and which can be used for the determination of an abnormality, a parameter $\beta$ for which the individual difference is large but which is not affected by a change in operation mode, and a parameter $\gamma$ for which the individual difference is large and which is affected by a change in operation mode. In such a case, as for the parameter $\alpha$, the prediction apparatus 10b creates a prediction model $\alpha1$ that has learned a relationship between an existing value of the parameter $\alpha$ of an actual result of the occurrence of an abnormality, and performs abnormality prediction based on the latest parameter $\alpha$ and the prediction model $\alpha1$. As for the parameter $\beta$, the prediction apparatus 10b creates a prediction model $\beta1$ that has learned a relationship between an estimation result of a probability density of the parameter $\beta$ and an actual result of the occurrence of an abnormality using the same method as in the first embodiment. When the prediction apparatus 10b acquires the latest value of the parameter $\beta$, the prediction apparatus 10b converts the value of the parameter $\beta$ into an estimated probability density value $\beta2$, and performs abnormality prediction based on the estimated probability density value $\beta2$ and the prediction model $\beta1$. As for the parameter $\gamma$, the prediction apparatus 10b creates a prediction model $\gamma1$ that has learned a relationship between an estimation result of a probability density of the parameter $\gamma$ for each operation mode and an actual result of the occurrence of an abnormality using the same method as in the second embodiment. When the prediction apparatus 10b acquires the latest value of the parameter $\gamma$, the prediction apparatus 10b converts the value of the parameter $\gamma$ into an estimated probability density value $\gamma2$ for each operation mode, and performs abnormality prediction based on the estimated probability density value $\gamma2$ and the prediction model $\gamma1$. In the present embodiment, an occurrence of an abnormality is simultaneously predicted by the plurality of prediction methods using a plurality of parameters having different properties as described above.

(Configuration)

Fig. 11 is a block diagram showing a configuration example of a prediction system according to the third embodiment.

Among configurations of a prediction system 1b according to the third embodiment, the same functional units as those forming the prediction system 1a according to the second embodiment are denoted by the same reference signs, and a description thereof will be omitted. The prediction system 1b includes the prediction apparatus 10b and the devices 5A to 5C. The prediction apparatus 10b includes a probability density estimation unit 12b, a prediction model creation unit 13b, and an abnormality prediction unit 14b instead of the probability density estimation unit 12a, the prediction model creation unit 13a, and the abnormality prediction unit 14a of the second embodiment. The prediction apparatus 10b includes a reliability calculation unit 18.

The probability density estimation unit 12b has functions of both the probability density estimation unit 12 of the first embodiment and the probability density estimation unit 12a of the second embodiment. Namely, the probability density estimation unit 12b estimates a probability density for the parameter $\beta$ of operation data, and estimates a conditional probability for the parameter Y.

The prediction model creation unit 13b has the functions of both the prediction model creation unit 13 of the first embodiment and the prediction model creation unit 13a of the second embodiment. Namely, the prediction model creation unit 13b creates a prediction model (probability density prediction model) based on an estimation result of the probability density of the operation data, and a prediction model (probability density prediction model for each operation mode) based on an estimation result of the probability density for each operation mode. Further, the prediction model creation unit 13b has a function of creating a prediction model (operation data prediction model) that predicts whether or not an abnormality occurs in the devices 5A to 5C, based on parameters used for the determination of an abnormality in the operation data acquired by the data acquisition unit 11. For example, the prediction model creation unit 13 learns operation data (for example, the pressure, the temperature, and the like of the cylinders) collected when a cylinder misfire has occurred in the device 5A or the like in the past, and calculates a threshold value for determining whether or not a cylinder misfire occurs when the operation data reaches a certain value.

The abnormality prediction unit 14b has functions of both the abnormality prediction unit 14 of the first embodiment and the abnormality prediction unit 14a of the second embodiment. Further, the abnormality prediction unit 14b predicts whether or not an abnormality occurs in the devices 5A to 5C, based on the operation data acquired by the data acquisition unit 11 and the operation data prediction model created by the prediction model creation unit 13b. Namely, the prediction model creation unit 13b performs prediction using three types of prediction methods such as prediction by the operation data prediction model, prediction by the probability density prediction model, and prediction by the probability density prediction model for each operation mode.

The reliability calculation unit 18 calculates a reliability of the prediction by the prediction model based on the prediction of the abnormality prediction unit 14b and an actual result for the prediction. For example, when the abnormality prediction unit 14b predicts an occurrence of an abnormality 100 times, and among the predictions, the number of times of actual occurrence of an abnormality is 58, the reliability calculation unit 18 calculates a reliability for the prediction of an occurrence of an abnormality by the abnormality prediction unit 14b, as 58%. For example, when the abnormality prediction unit 14b predicts no occurrence of an abnormality 1000 times, and among the predictions, the number of times of no actual occurrence of an abnormality is 900, the reliability calculation unit 18 calculates a reliability for the prediction of no occurrence of an abnormality by the abnormality prediction unit 14b, as 90%. The reliability calculation unit 18 calculates a reliability for the prediction by each of the three types of prediction methods (prediction by the operation data prediction model, prediction by the probability density prediction model, and prediction by the probability density prediction model for each operation mode).

(Prediction Process)

The abnormality prediction unit 14b performs abnormality prediction on the latest operation data in a predetermined control period using the three types of prediction methods.

The prediction by the probability density prediction model and the prediction by the probability density prediction model for each operation mode are the same as those described with reference to Figs. 7 and 10. In both processes of Figs. 7 and 10, the abnormality prediction unit 14b records the prediction result in the storage unit 16. Next, a prediction process by the operation data prediction model will be described with reference to Fig. 12.

Fig. 12 is a flowchart showing one example of the prediction process according to the third embodiment.

First, the data acquisition unit 11 acquires the latest operation data of the device 5C (for example, a parameter for which the individual difference among the devices 5A to 5C is relatively small and which is effective for determining a cylinder misfire) (step S41). Next, the abnormality prediction unit 14b compares the operation data to a threshold value (operation data prediction model). When a value of the operation data is smaller than the threshold value (step S42: Yes), the abnormality prediction unit 14b determines that there is a possibility of an abnormality (cylinder misfire) occurring in the device 5C (step S43). The output unit 15 outputs a prediction result that there is a possibility of misfire, and records the prediction result in the storage unit 16 in association with the operation data (step S45). When the value of the operation data is the threshold value or more (step S42: No), the abnormality prediction unit 14b determines that there is no possibility of an abnormality (misfire) occurring in the device 5C (step S44). The output unit 15 outputs a prediction result that there is no possibility of misfire, and records the prediction result in the storage unit 16 in association with the operation data (step S45).

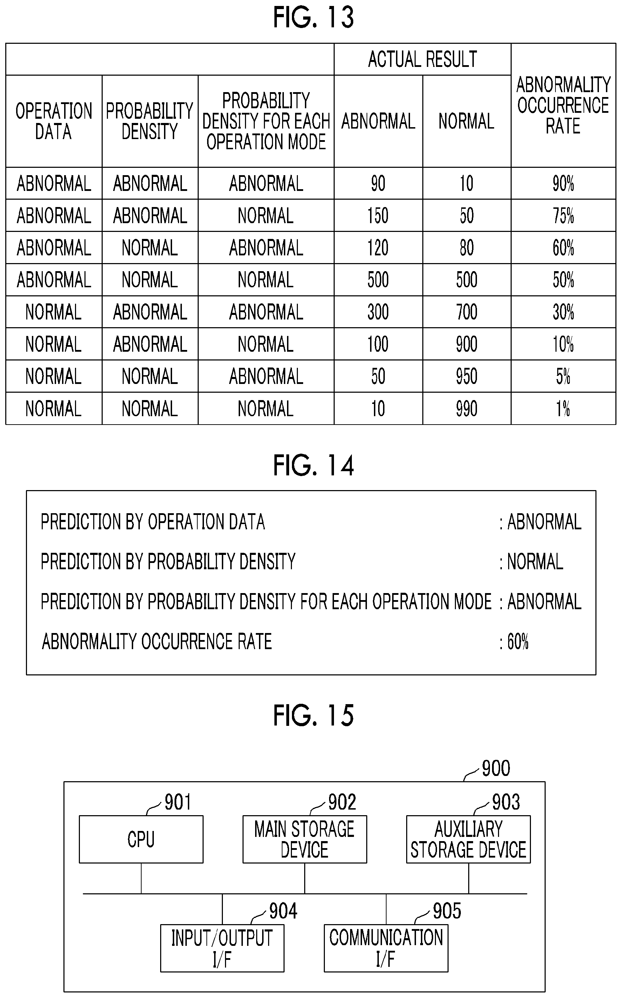

Fig. 13 is a table showing one example of prediction results and prediction reliabilities according to the third embodiment.

Fig. 13 shows all combinations of results of prediction performed by the abnormality prediction unit 14b using the three types of prediction methods, and actual results for the prediction. For example, data in a first column shows that the number of times that the device 5C to be predicted is predicted to be abnormal by all of the prediction by the operation data prediction model, the prediction by the probability density prediction model, and the prediction by the probability density prediction model for each operation mode is 100, among the predictions, the number of times of actual occurrence of an abnormality is 90, and the number of times of no occurrence of an abnormality is 10. The abnormality occurrence rate in this case is 90%. Namely, a reliability of the prediction when an occurrence of an abnormality is predicted by all the three prediction methods is 90%. The same applies to data in second and subsequent columns.

The reliability calculation unit 18 aggregates actual results for the prediction by combining prediction results generated by the abnormality prediction unit 14b and recorded in the storage unit 16, with warning data acquired by the data acquisition unit 11, and manages the data of the structure shown as an example in Fig. 13. For example, in a case where all three results from prediction performed by the abnormality prediction unit 14b using the three methods based on operation data at time 13:00 are normal (no abnormality), when the data acquisition unit 11 does not acquire warning data within a predetermined period from time 13:00, it is considered that an abnormality has not occurred, and the reliability calculation unit 18 adds 1 to a value of actual result "normal" of a row of operation data "normal", probability density "normal", and probability density for each operation mode "normal" in the table of Fig. 13 ($990 \rightarrow 991$). Then, the reliability calculation unit 18 updates the value of the "abnormality occurrence rate" ($10 \div 991$). When the data acquisition unit 11 acquires warning data of the occurrence of a misfire in the cylinders of the device 5C within the predetermined period from time 13:00, the reliability calculation unit 18 adds 1 to a value of actual result "abnormal" of the same row of Fig. 13 ($10 \rightarrow 11$) and updates the value of the "abnormality occurrence rate" ($11 \div 990$). The same applies to the case of other combinations of the prediction results by the three prediction methods. The reliability calculation unit 18 holds the data of the structure shown as an example in Fig. 13, in the storage unit 16 and updates the contents whenever the abnormality prediction unit 14b performs prediction.

The output unit 15 outputs the reliabilities of the prediction ("abnormality occurrence rate" in Fig. 13) aggregated by the reliability calculation unit 18, to the monitor or the like of the prediction apparatus 10b, together with the prediction results by the three prediction methods. An example of an output from the output unit 15 is shown in Fig. 14.

Fig. 14 is a table showing one example of the output of predicted values according to the third embodiment.

Fig. 14 shows an output example when the prediction by the operation data prediction model is "abnormal", the prediction by the probability density prediction model is "normal", and the prediction by the probability density prediction model for each operation mode is "abnormal". A user looks at the output result and can know that an occurrence of an abnormality within a predetermined period is predicted by the operation data prediction model and the probability density prediction model for each operation mode and a reliability of the prediction is 60%.

According to the present embodiment, prediction is performed by a plurality of methods suitable for properties (whether or not the individual difference among the devices is large, or the like) according to the properties of the operation data. Accordingly, it is possible to expect an improvement in prediction accuracy. It is possible to refer to a reliability of a prediction ("abnormality occurrence rate" in Figs. 13 and 14) for each combination of the predictions by the plurality of prediction models, and a user can evaluate a prediction result based on the reliabilities of the predictions.

In the embodiment, the case of using all the three prediction methods has been described as an example, but prediction may be performed by any combination of two of the three prediction methods. For example, when there exists no parameter for which the individual difference among the devices is large but which is not affected by a change in operation mode, prediction may be performed by the operation data prediction model and the probability density prediction model for each operation mode.

Fig. 15 is a block diagram showing one example of a hardware configuration of the prediction system according to each of the embodiments.

A computer 900 includes a CPU 901, a main storage device 902, an auxiliary storage device 903, an input/output interface 904, and a communication interface 905. The prediction apparatuses 10, 10a, and 10b described above are mounted on the computer 900. Then, each function described above is stored in the auxiliary storage device 903 in the form of a program. The CPU 901 expands the program in the main storage device 902 by reading out the program from the auxiliary storage device 903, and executes the above processes according to the program. The CPU 901 secures a storage area in the main storage device 902 according to the program. The CPU 901 secures a storage area in the auxiliary storage device 903 according to the program, the storage area storing data under process.

A program for realizing all or some of the functions of the prediction apparatuses 10, 10a, and 10b may be recorded on a computer-readable recording medium, and a process by each functional unit may be performed by reading the program recorded on the recording medium, onto a computer system and by executing the program. The "computer system" referred to here includes hardware such as an OS and peripheral devices. The "computer system" includes a homepage provision environment (or display environment) when the WWW system is used. The "computer-readable recording medium" refers to a portable medium such as a CD, a DVD, or a USB or a storage device such as a hard disk built in the computer system. When the program is delivered to the computer 900 by a communication line, the computer 900 that receives the delivery may expand the program in the main storage device 902 and execute the above processes. The program may realize some of the above-described functions, and may be able to further realize the above-described functions in combination with a program already recorded in the computer system.

Each of the prediction apparatuses 10, 10a, and 10b may be configured by a plurality of the computers 900.

As described above, some embodiments according to the present disclosure have been described, but all the embodiments have been presented as an example and are not intended to limit the scope of the invention. Instead, the present invention is defined by the appended claims.

Industrial Applicability

According to the prediction apparatus, the prediction method, and the program described above, it is possible to perform prediction excluding the influence of an individual difference among devices.

Reference Signs List

1, 1a, 1b Prediction system
10, 10a, 10b Prediction apparatus
11 Data acquisition unit
12, 12a, 12b Probability density estimation unit
13, 13a, 13b Prediction model creation unit
14, 14a, 14b Abnormality prediction unit
15 Output unit
16 Storage unit
17 Setting unit
18 Reliability calculation unit
900 Computer
901 CPU
902 Main storage device
903 Auxiliary storage device
904 Input/output interface
905 Communication interface

Claims

1. A prediction apparatus (10) comprising:

a data acquisition unit (11) configured to acquire operation data indicating an operation state of a device (5A-5C);
a probability density estimation unit (12) configured to estimate a probability density of the operation data; and
an abnormality prediction unit (14) configured to predict whether or not an abnormality occurs in the device (5A-5C), based on an estimation result of the probability density of the operation data and a first prediction model, **characterized in that**
the device (5A-5C) is gas engine and the abnormality is a misfire occurring in a cylinder of the gas engine,
the data acquisition unit (11) is configured to acquire second operation data and a warning data for a first predetermined period,
the probability density estimation unit (12) is configured to apply a variational Bayesian method to the second operation data to estimate second probability density values of the second operation data,

and the prediction apparatus (10) further comprises:

a prediction model creation unit (13) which is configured to perform a pre-process in which with reference to the warning data, label information of a misfire occurrence is attached to estimated probability density values for a period between a first day when a misfire has actually occurred and a second day that goes back a second predetermined period from the first day, and label information of a no misfire is attached to estimated second probability density values on another days outside the period, wherein
the prediction model creation unit (13) is configured to use the estimated second probability density values to which the label information has been attached, as learning data, and to create the first prediction model representing a relationship between the occurrence of a misfire and a probability density.

2. A computer-implemented prediction method of a prediction apparatus, the method comprising:

a step (S21) of acquiring operation data indicating an operation state of a device (5A-5C);
a step (S22) of estimating a probability density of the operation data; and
a step (S24, S25) of predicting whether or not an abnormality occurs in the device (5A-5C), based on an estimation result of the probability density of the operation data and a prediction model,
**characterized in that**
the device (5A-5C) is gas engine and the abnormality is a misfire occurring in a cylinder of the gas engine, and the method further comprises:

a step (S11) of acquiring second operation data and a warning data for a first predetermined period,
a step (S12) of estimating second probability density values of the second operation data by applying a variational Bayesian method to the second operation data,
a step (S13) of performing a pre-process in which with reference to the warning data, label information of a misfire occurrence is attached to estimated probability density values for a period between a first day when a misfire has actually occurred and a second day that goes back a second predetermined period from the first day, and label information of a no misfire is attached to estimated second probability density values on another days outside the period, and
a step (S14) of creating the first prediction model representing a relationship between the occurrence of a misfire and a probability density by using the estimated second probability density values to which the label information has been attached, as learning data.

3. A computer program comprising instructions which, when the program is executed by a computer (900), cause the computer (900) to carry out the steps of the method of claim 2.

**Patentansprüche**

1. Prädiktionsgerät (10), umfassend:

eine Datenerfassungseinheit (11), die konfiguriert ist, um Betriebsdaten zu erfassen, die einen Betriebszustand einer Vorrichtung (5A-5C) angeben;
eine Wahrscheinlichkeitsdichte-Schätzeinheit (12), die konfiguriert ist, um eine Wahrscheinlichkeitsdichte der Betriebsdaten zu schätzen; und
eine Anomalie-Prädiktionseinheit (14), die konfiguriert ist, um basierend auf einem Schätzungsergebnis der Wahrscheinlichkeitsdichte der Betriebsdaten und einem ersten Prädiktionsmodell vorherzusagen, ob eine Anomalie in der Vorrichtung (5A-5C) auftritt oder nicht,
**dadurch gekennzeichnet, dass**
die Vorrichtung (5A-5C) ein Gasmotor ist und die Anomalie eine Fehlzündung ist, die in einem Zylinder des Gasmotors auftritt,
die Datenerfassungseinheit (11) konfiguriert ist, um zweite Betriebsdaten und Warnungsdaten für eine erste vorbestimmte Periode zu erfassen,
die Wahrscheinlichkeitsdichte-Schätzeinheit (12) konfiguriert ist, um ein Bayes'sches Variationsverfahren auf die zweiten Betriebsdaten anzuwenden, um zweite Wahrscheinlichkeitsdichtewerte der zweiten Betriebsdaten zu schätzen,
und das Prädiktionsgerät (10) weiter folgendes umfasst:

eine Prädiktionsmodell-Erstellungseinheit (13), die konfiguriert ist, um eine Vorverarbeitung durchzuführen, bei der unter Bezugnahme auf die Warnungsdaten Kennzeichnungsinformationen über das Auftreten einer Fehlzündung an geschätzte Wahrscheinlichkeitsdichtewerte für eine Periode zwischen einem ersten Tag, an dem tatsächlich eine Fehlzündung aufgetreten ist, und einem zweiten Tag, der eine zweite vorbestimmte Periode vor dem ersten Tag liegt, angebracht werden, und Kennzeichnungsinformationen über keine Fehlzündung an geschätzte zweite Wahrscheinlichkeitsdichtewerte an anderen Tagen außerhalb der Periode angebracht werden, wobei

die Prädiktionsmodell-Erstellungseinheit (13) konfiguriert ist, um die geschätzten zweiten Wahrscheinlichkeitsdichtewerte, an denen die Kennzeichnungsinformationen angebracht wurden, als Lerndaten zu verwenden und das erste Prädiktionsmodell zu erstellen, das eine Beziehung zwischen dem Auftreten einer Fehlzündung und einer Wahrscheinlichkeitsdichte repräsentiert.

2. Computer-implementiertes Prädiktionsverfahren eines Prädiktionsgeräts, wobei das Verfahren folgendes umfasst:

einen Schritt (S21) des Erfassens von Betriebsdaten, die einen Betriebszustand einer Vorrichtung (5A-5C) angeben;

einen Schritt (S22) des Schätzens einer Wahrscheinlichkeitsdichte der Betriebsdaten; und

einen Schritt (S24, S25) des Vorhersagens, ob eine Anomalie in der Vorrichtung (5A-5C) auftritt oder nicht, basierend auf einem Schätzungsergebnis der Wahrscheinlichkeitsdichte der Betriebsdaten und einem Prädiktionsmodell,

**dadurch gekennzeichnet, dass**

die Vorrichtung (5A-5C) ein Gasmotor ist und die Anomalie eine Fehlzündung ist, die in einem Zylinder des Gasmotors auftritt,

und das Verfahren weiter folgendes umfasst:

einen Schritt (S11) des Erfassens von zweiten Betriebsdaten und von Warnungsdaten für eine erste vorbestimmte Periode,

einen Schritt (S12) des Schätzens zweiter Wahrscheinlichkeitsdichtewerte der zweiten Betriebsdaten durch Anwenden eines Bayes'schen Variationsverfahrens auf die zweiten Betriebsdaten,

einen Schritt (S13) des Durchführens einer Vorverarbeitung, bei der unter Bezugnahme auf die Warnungsdaten Kennzeichnungsinformationen über das Auftreten einer Fehlzündung an geschätzte Wahrscheinlichkeitsdichtewerte für eine Periode zwischen einem ersten Tag, an dem tatsächlich eine Fehlzündung aufgetreten ist, und einem zweiten Tag, der eine zweite vorbestimmte Periode vor dem ersten Tag liegt, angebracht werden, und Kennzeichnungsinformationen über keine Fehlzündung an geschätzte zweite Wahrscheinlichkeitsdichtewerte an anderen Tagen außerhalb der Periode angebracht werden, und

einen Schritt (S14) des Erstellens des ersten Prädiktionsmodells, das eine Beziehung zwischen dem Auftreten einer Fehlzündung und einer Wahrscheinlichkeitsdichte repräsentiert, indem die geschätzten zweiten Wahrscheinlichkeitsdichtewerte, an welche die Kennzeichnungsinformationen angebracht wurden, als Lerndaten verwendet werden.

3. Computerprogramm, das Anweisungen umfasst, die, wenn das Programm von einem Computer (900) ausgeführt wird, den Computer (900) veranlassen, die Schritte des Verfahrens nach Anspruch 2 auszuführen.

**Revendications**

1. Appareil de prédiction (10) comprenant :

une unité (11) d'acquisition de données configurée pour acquérir des données de fonctionnement indiquant un état de fonctionnement d'un dispositif (5A-5C) ;

une unité (12) d'estimation de densité de probabilité configurée pour estimer une densité de probabilité des données de fonctionnement ; et

une unité (14) de prédiction d'anomalie configurée pour prédire si une anomalie se produit ou non dans le dispositif (5A-5C), sur la base d'un résultat d'estimation de la densité de probabilité des données de fonctionnement et d'un premier modèle de prédiction,

**caractérisé en ce que**

le dispositif (5A-5C) est un moteur à gaz et l'anomalie est un raté d'allumage se produisant dans un cylindre du moteur à gaz,

l'unité (11) d'acquisition de données est configurée pour acquérir des secondes données de fonctionnement et des données d'avertissement pour une première période prédéterminée,

l'unité (12) d'estimation de densité de probabilité est configurée pour appliquer un procédé bayésien variationnel aux secondes données de fonctionnement afin d'estimer des secondes valeurs de densité de probabilité des secondes données de fonctionnement,

et l'appareil de prédiction (10) comprend en outre :

une unité (13) de création de modèle de prédiction qui est configurée pour réaliser un pré-traitement dans lequel, en référence aux données d'avertissement, des informations d'étiquette d'occurrence d'un raté d'allumage sont attachées à des valeurs estimées de densité de probabilité pour une période comprise entre un premier jour où un raté d'allumage s'est effectivement produit et un second jour qui remonte à une seconde période prédéterminée par rapport au premier jour, et des informations d'étiquette de non occurrence de raté d'allumage sont attachées à des secondes valeurs estimées de densité de probabilité sur d'autres jours en dehors de la période, dans lequel

l'unité (13) de création de modèle de prédiction est configurée pour utiliser les secondes valeurs estimées de densité de probabilité auxquelles les informations d'étiquette ont été attachées, en tant que données d'apprentissage, et pour créer le premier modèle de prédiction représentant une relation entre l'occurrence d'un raté d'allumage et une densité de probabilité.

2. Procédé de prédiction mis en oeuvre par ordinateur d'un appareil de prédiction, le procédé comprenant :

une étape (S21) d'acquisition de données de fonctionnement indiquant un état de fonctionnement d'un dispositif (5A-5C) ;

une étape (S22) d'estimation d'une densité de probabilité des données de fonctionnement ; et

une étape (S24, S25) de prédiction prédisant si une anomalie se produit ou non dans le dispositif (5A-5C), sur la base d'un résultat d'estimation de la densité de probabilité des données de fonctionnement et d'un modèle de prédiction,

**caractérisé en ce que**

le dispositif (5A-5C) est un moteur à gaz et l'anomalie est un raté d'allumage se produisant dans un cylindre du moteur à gaz,

et le procédé comprend en outre :

une étape (S11) d'acquisition de secondes données de fonctionnement et de données d'avertissement pour une première période prédéterminée,

une étape (S12) d'estimation de secondes valeurs de densité de probabilité des secondes données de fonctionnement par application d'un procédé bayésien variationnel aux secondes données de fonctionnement,

une étape (S13) de réalisation d'un pré-traitement dans lequel, en référence aux données d'avertissement, des informations d'étiquette d'une occurrence de raté d'allumage sont attachées à des valeurs estimées de densité de probabilité pour une période comprise entre un premier jour où un raté d'allumage s'est effectivement produit et un second jour qui remonte à une seconde période prédéterminée par rapport au premier jour, et des informations d'étiquette de non occurrence de raté d'allumage sont attachées à des secondes valeurs estimées de densité de probabilité sur d'autres jours en dehors de la période, et

une étape (S14) de création du premier modèle de prédiction représentant une relation entre l'occurrence d'un raté d'allumage et une densité de probabilité en utilisant les secondes valeurs estimées de densité de probabilité auxquelles les informations d'étiquette ont été attachées, en tant que données d'apprentissage.

3. Programme informatique comprenant des instructions qui, lorsque le programme est exécuté par un ordinateur (900), amènent l'ordinateur (900) à effectuer les étapes du procédé selon la revendication 2.

# FIG. 1

# FIG. 2

# FIG. 3

DEVICE 5A

INDEX VALUE OF COMBUSTION STATE

x1

PHYSICAL QUANTITY X

TIME

THRESHOLD VALUE BY WHICH SIGN OF ABNORMALITY CAN BE DETERMINED DIFFERS DEPENDING ON DEVICE

DEVICE 5B

INDEX VALUE OF COMBUSTION STATE

x2

PHYSICAL QUANTITY X

TIME

# FIG. 4

PROBABILITY DENSITY

# FIG. 5

## FIG. 6

```
              ( START )
                  │
                  ▼
  ┌──────────────────────────────────┐
  │ ACQUIRE OPERATION DATA AND THE LIKE │──S11
  └──────────────────────────────────┘
                  │
                  ▼
  ┌──────────────────────────────────┐
  │    ESTIMATE PROBABILITY DENSITY    │──S12
  └──────────────────────────────────┘
                  │
                  ▼
  ┌──────────────────────────────────┐
  │        PERFORM PRE-PROCESS         │──S13
  └──────────────────────────────────┘
                  │
                  ▼
  ┌──────────────────────────────────┐
  │     GENERATE PREDICTION MODEL      │──S14
  └──────────────────────────────────┘
                  │
                  ▼
               ( END )
```

## FIG. 7

```
              ( START )
                  │
                  ▼
  ┌──────────────────────────────┐
  │    ACQUIRE OPERATION DATA     │──S21
  └──────────────────────────────┘
                  │
                  ▼
  ┌──────────────────────────────┐
  │  ESTIMATE PROBABILITY DENSITY  │──S22
  └──────────────────────────────┘
                  │
                  ▼           S23
              ╱──────────╲
             ╱ PROBABILITY ╲         NO
            ⟨ DENSITY < THRESHOLD ⟩──────────┐
             ╲   VALUE?   ╱                   │
              ╲──────────╱                    │
                  │ YES                       │
                  ▼         S24               ▼         S25
  ┌──────────────────────────────┐  ┌──────────────────────────────┐
  │   THERE IS POSSIBILITY       │  │   THERE IS NO POSSIBILITY    │
  │ OF OCCURRENCE OF ABNORMALITY │  │ OF OCCURRENCE OF ABNORMALITY │
  └──────────────────────────────┘  └──────────────────────────────┘
                  │                           │
                  ◄───────────────────────────┘
                  ▼
  ┌──────────────────────────────┐
  │    OUTPUT PREDICTION RESULT    │──S26
  └──────────────────────────────┘
                  │
                  ▼
               ( END )
```

FIG. 8

INDEX VALUE OF
COMBUSTION STATE

LOAD ZONE 1

LOAD ZONE 2

LOAD (kW)

80

EP 4 071 571 B1

# FIG. 9

# FIG. 10

```
                      ┌─────────────┐
                      │    START    │
                      └─────────────┘
                             │
                             ▼
        ┌──────────────────────────────────┐
        │      ACQUIRE OPERATION DATA       │──── S31
        └──────────────────────────────────┘
                             │
                             ▼
        ┌──────────────────────────────────┐
        │    ESTIMATE PROBABILITY DENSITY   │──── S32
        │      FOR EACH OPERATION MODE      │
        └──────────────────────────────────┘
                             │
                             ▼
        ┌──────────────────────────────────┐
        │    COMPARE PROBABILITY DENSITY    │
        │      FOR EACH OPERATION MODE      │──── S33
        │         TO THRESHOLD VALUE        │
        └──────────────────────────────────┘
                             │
                             ▼        S34
                    ╱─────────────────╲
                   ╱  PROBABILITY DENSITY ╲      NO
                  ╱      < THRESHOLD        ╲──────────┐
                  ╲        VALUE?           ╱          │
                   ╲─────────────────╲    ╱           │
                             │ YES                     │
                             ▼        S35              ▼        S36
        ┌──────────────────────────────────┐   ┌──────────────────────────────────┐
        │       THERE IS POSSIBILITY        │   │      THERE IS NO POSSIBILITY      │
        │   OF OCCURRENCE OF ABNORMALITY    │   │   OF OCCURRENCE OF ABNORMALITY    │
        └──────────────────────────────────┘   └──────────────────────────────────┘
                             │                           │
                             ◄───────────────────────────┘
                             ▼
        ┌──────────────────────────────────┐
        │      OUTPUT PREDICTION RESULT     │──── S37
        └──────────────────────────────────┘
                             │
                             ▼
                      ┌─────────────┐
                      │     END     │
                      └─────────────┘
```

# FIG. 11

# FIG. 12

## FIG. 13

| OPERATION DATA | PROBABILITY DENSITY | PROBABILITY DENSITY FOR EACH OPERATION MODE | ACTUAL RESULT | | ABNORMALITY OCCURRENCE RATE |
|---|---|---|---|---|---|
| | | | ABNORMAL | NORMAL | |
| ABNORMAL | ABNORMAL | ABNORMAL | 90 | 10 | 90% |
| ABNORMAL | ABNORMAL | NORMAL | 150 | 50 | 75% |
| ABNORMAL | NORMAL | ABNORMAL | 120 | 80 | 60% |
| ABNORMAL | NORMAL | NORMAL | 500 | 500 | 50% |
| NORMAL | ABNORMAL | ABNORMAL | 300 | 700 | 30% |
| NORMAL | ABNORMAL | NORMAL | 100 | 900 | 10% |
| NORMAL | NORMAL | ABNORMAL | 50 | 950 | 5% |
| NORMAL | NORMAL | NORMAL | 10 | 990 | 1% |

## FIG. 14

PREDICTION BY OPERATION DATA : ABNORMAL

PREDICTION BY PROBABILITY DENSITY : NORMAL

PREDICTION BY PROBABILITY DENSITY FOR EACH OPERATION MODE : ABNORMAL

ABNORMALITY OCCURRENCE RATE : 60%

## FIG. 15

25

**EP 4 071 571 B1**

## REFERENCES CITED IN THE DESCRIPTION

**Patent documents cited in the description**

- JP 2016157280 A

- JP 2019159604 A